# EUROPÄISCHE PATENTSCHRIFT

(11) **EP 3 492 188 B1**
(45) Veröffentlichungstag und Bekanntmachung des Hinweises auf die Patenterteilung: **22.01.2020**
(21) Anmeldenummer: 18210621.1
(22) Anmeldetag: 15.02.2018
(51) Int. Cl.: B21B 27/03, B21B 31/07, B21B 38/00

(54) **VORRICHTUNG MIT VERSCHLEISSTEIL UND MESSEINRICHTUNG FÜR VERSCHLEISS**
DEVICE WITH WEAR PART AND MEASURING DEVICE FOR WEAR
DISPOSITIF À PIÈCE D'USURE ET DISPOSITIF DE MESURE D'USURE

(30) Priorität: 06.04.2017 DE 102017205886
(43) Veröffentlichungstag der Anmeldung: 05.06.2019
(62) Teilanmeldung aus: 18156848.6
(73) Patentinhaber: SMS Group GmbH, 40237 Düsseldorf (DE)
(72) Erfinder: Wiens, Oliver, 40667 Meerbusch-Büderich (DE); Klose, Heiko, 45549 Sprockhövel (DE); Schulze, Stephan, 40668 Meerbusch (DE); Wedell, Tobias, 40489 Düsseldorf (DE); Hellfeier, Markus, 41516 Grevenbroich (DE); Sifi, Nabil, 40225 Düsseldorf (DE)
(74) Vertreter: Klüppel, Walter

(56) Entgegenhaltungen:
- EP-A1- 0 120 338
- EP-A2- 1 174 636
- DE-A1-102007 031 299
- DE-B3-102014 112 868
- DE-C1- 10 019 324
- US-B1- 9 353 815

## Beschreibung

Die Erfindung betrifft eine Vorrichtung umfassend ein Verschleißteil und eine Messeinrichtung zum Erfassen eines mechanischen Materialabtrags an einer Verschleißfläche des Verschleißteils. Darüber hinaus betrifft die Erfindung ein Verfahren zum Betreiben der Vorrichtung zum Erfassen des Verschleißes in Form des Materialabtrags an dem Verschleißteil.

Anwendung kann die Erfindung finden auf beliebige Verschleißteile in unterschiedlichsten technischen Bereichen. Im Bereich der Hüttenindustrie empfiehlt sich die Anwendung bei Kokillen von Gießmaschinen, bei BOF-Lamellen von Konvertern, bei Walzen und Haspeln, in dem Elektrodenstrang von Lichtbogenöfen, bei Lichtbogenöfen oder Konvertern, wo der Verschleiß der Ausmauerung gemessen werden kann sowie bei wassergekühlten Paneelen als Verschleißteile. Weitere Verschleißteile können sein Anbaustücke, Anstellzylinder, Buchsen von Rollenzapfen oder Walzenzapfen in Lagereinbaustücken, Verschleißplatten zwischen Einbaustücken und Walzgerüsten (bewegte und/oder feststehende Teile), Stahlträger mit oder ohne Kohlephaserverbundwerkstoffen, Treiberrollen oder Haspeldorne von Haspeleinrichtungen.

Messvorrichtungen zum Erfassen eines mechanischen Materialabtrags an einer Verschleißfläche sind im Stand der Technik grundsätzlich bekannt, so z. B. aus der Internationalen Patentanmeldung WO 79/00666. Diese Patentanmeldung offenbart eine Messvorrichtung für Kokillen von Stranggussanlagen als Verschleißteil zum Erfassen des Materialabtrags an der Kokillenoberfläche. Die Messeinrichtung besteht aus zwei gegenüberliegenden Messnadeln, welche z. B. die gegenüberliegenden Breitseiten des Kokillenhohlraums kontaktieren und an diesen Breitseitenflächen, welche Verschleißflächen darstellen, entlanggeführt werden können. Die Nadeln sind jeweils federnd gelagert; d. h. sie werden mit einer vorbestimmten Anpresskraft gegen die jeweiligen Verschleißflächen gedrückt. Beim Entlangfahren an der Verschleißfläche werden die einzelnen Messnadeln relativ zueinander verfahren in Abhängigkeit des jeweils erfassten Materialabtrags. Das Verfahren bzw. die Verlagerung der einzelnen Messnadeln wird mit Hilfe einer elektrischen Messeinrichtung erfasst. Die erfasste Verlagerung der einzelnen Nadeln repräsentiert dann den jeweiligen Materialabtrag an den Verschleißflächen.

Die DE 10 2007 031 299 A1 offenbart eine Vorrichtung gemäß dem Oberbegriff des Patentanspruchs 1.

Der Erfindung liegt die Aufgabe zugrunde, eine bekannte Vorrichtung mit einem Verschleißteil, welches eine Verschleißfläche aufweist, und mit einer Messeinrichtung zum Erfassen eines Materialabtrags an der Verschleißfläche dahingehend weiterzubilden, dass die Betriebsdauer des Verschleißteils erfasst wird. Außerdem betrifft die Erfindung ein Verfahren zum Betreiben der Vorrichtung zum Erfassen eines Materialabtrags an der Verschleißfläche des Verschleißteils und zum Erfassen der Betriebsdauer des Verschleißteils.

Bezüglich der Vorrichtung wird die Aufgabe durch den Gegenstand des Anspruchs 1 gelöst. Demnach ist die erfindungsgemäße Vorrichtung dadurch gekennzeichnet, dass die Messeinrichtung weiterhin aufweist einen Schwingungssensors zum Erfassen, ob das Verschleißteil in Schwingungen versetzt ist; und dass die Auswerteeinrichtung ausgebildet ist, die Betriebsdauer des Verschleißteils zu ermitteln als diejenige Zeitdauer während welcher die Amplitude oder die Frequenz der Schwingung des Verschleißteils einen vorgegebenen Schwellenwert überschreitet.

Die beanspruchte Vorrichtung als Kombination von Verschleißteil und zugeordneter Messeinrichtung zur Erfassung des Materialabtrags an einer Verschleißfläche des Verschleißteiles bietet den Vorteil, dass der Zustand der Verschleißfläche zeitlich aktuell, einheitlich und vergleichbar zur Verfügung steht. Dies bedeutet, dass mit der beanspruchten Vorrichtung der Verschleiß pro Zeiteinheit (Einsatzdauer) objektiv für alle Kokillen, die mit diesem System ausgerüstet sind, auf ein und derselben Weise (einheitlich) bestimmt werden, wodurch die Verschleißergebnisse (Materialabtrag) mit anderen Kupferplatten, die ebenso vermessen worden sind, vergleichbar werden. Hierdurch lassen sich Qualitätsunterschiede von Kupferplatten, auch gegenüber dem Wettbewerb, wenn auch diese Kupferplatten mit dem Messsystem ausgerüstet worden sind, auf derselben Datenbasis und daher relativ objektiv bestimmen. Die Messeinrichtung, insbesondere der Verschleißsensor ist dabei hinsichtlich Druck, Temperatur und zum Messen der Schichtdicke an den jeweiligen Anwendungsfall geeignet anzupassen. Diese kontinuierliche automatisierte Verschleißzustands-Erfassung an dem Verschleißteil zur Bestimmung seines Verschleiß-Istzustandes ermöglicht - bei historischer Betrachtung - eine zeitliche Verschleißvorhersage. Diese Verschleißvorhersage wiederum erlaubt die Ermittlung einer verbleibenden Betriebsdauer bzw. Restproduktionszeit für das Verschleißteil. Die beanspruchte Messeinrichtung kann überall dort zur Anwendung kommen, wo die Abtragung einer Verschleißfläche zu einer Verringerung einer Schichtdicke führt. Für das erforderliche Messprinzip ist es erforderlich, dass der verwendete Messsensor, hier der elektrische Widerstand in die abzutragende Schicht hineinragt. Dabei sollte die Dicke des elektrischen Widerstandes vorzugsweise größer oder gleich der Dicke der abzutragenden Schicht sein, um das Ausmaß der Abtragung über der gesamten Höhe bzw. Dicke der Schicht erfassen zu können.

Die vorliegende Erfindung basiert auf der Erkenntnis, dass sich der Ohm'sche Widerstandswert eines elektrischen Widerstandes, insbesondere eines elektrischen Leiters verändert, insbesondere erhöht, wenn dieser Leiter in seinem Querschnitt verringert oder gar durchtrennt wird. Genau diese beiden Effekte treten ein, wenn der Verschleißsensor, wie erfindungsgemäß beansprucht, in die Verschleißfläche integriert ist. Bei einem beispielsweise mechanischen Abtrag der Verschleißfläche wird dann gleichzeitig auch der elektrische Widerstand beispielsweise mechanisch mit abgetragen, d. h. in seinem Querschnitt reduziert oder gar durchtrennt. Die Erfindung sieht vor, dass die mit dem Materialabtrag einhergehende Änderung des Ohm'schen Widerstandswertes des elektrischen Widerstandes erfasst und als Maß für den erfolgten Materialabtrag an der Verschleißfläche oder als Maß für die verbleibende Dicke der Verschleißfläche herangezogen bzw. ausgewertet wird.

Für die ordnungsgemäße Funktion der erfindungsgemäßen Vorrichtung ist es erforderlich, dass der elektrische Widerstand zumindest zu Beginn und nach Beendigung des Materialabtrags, vorzugsweise während der gesamten Betriebsdauer der Vorrichtung, elektrisch leitend und stromführend, d. h. Bestandteil des elektrischen Schaltkreises der Messeinrichtung ist. Nur dann kann die Veränderung seines Ohm'schen Widerstandswertes aufgrund seines eigenen Materialabtrags in Folge des Materialabtrags an der Verschleißfläche erfindungsgemäß erfasst und ausgewertet werden.

Abgesehen davon, dass die Betriebsdauer natürlich direkt mit einer Zeiterfassungseinrichtung gemessen werden kann, empfiehlt es sich bei bestimmten Verschleißteilen, die Betriebsdauer indirekt in Abhängigkeit des Vorliegens bestimmter Betriebsparameter zu messen bzw. zu erfassen. So sieht die Erfindung vor, dass die Messeinrichtung weiterhin aufweist einen Schwingungssensor zum Erfassen, ob das Verschleißteil in Schwingungen versetzt ist. Die Auswerteeinrichtung ist dann erfindungsgemäß ausgebildet, die Betriebsdauer des Verschleißteils zu ermitteln als diejenige Zeitdauer, während welcher die Amplitude oder die Frequenz der Schwingung des Verschleißteils einen vorgegebenen Schwellenwert überschreitet.

Gemäß einem ersten Ausführungsbeispiel besteht der elektrische Widerstand aus mindestens einem elektrischen Leiter, welcher zumindest abschnittsweise parallel zu der Verschleißfläche verlaufend angeordnet ist. Diese Art der Verlegung des Leiters vergrößert vorteilhafter Weise die Wahrscheinlichkeit, dass der Leiter bei einem Abtrag der Verschleißfläche mit abgetragen wird. Außerdem wird bei dieser Art der Verlegung mehr Material des Leiters abgetragen, als wenn der Leiter nur punktuell an der Verschleißfläche anliegen würde.

Wenn der elektrische Widerstand derart in die Verschleißfläche integriert ist, dass der elektrische Leiter direkt an der Oberfläche der Verschleißfläche liegt, hat dies den Vorteil, dass jeder auch noch so kleine Materialabtrag sofort eine Änderung, insbesondere Erhöhung seines Ohm'schen Widerstandswertes zur Folge hat und deshalb erkannt wird. Alternativ kann der Leiter jedoch auch in einem bestimmten Abstand zu der Verschleißfläche innerhalb des Verschleißteils angeordnet sein. Wenn dann nach einer gewissen Betriebszeit dennoch eine Änderung des Ohm'schen Widerstandswertes festgestellt wird, lässt dies den Schluss zu, dass ein Materialabtrag an der Verschleißfläche zumindest entsprechend dem besagten ursprünglichen Abstand zwischen der Verschleißfläche und der Position des Leiters stattgefunden haben muss.

Wenn der elektrische Widerstand aus einer Mehrzahl elektrischer Leiter gebildet ist, welche in verschiedenen Tiefen in Bezug auf die ursprüngliche Verschleißfläche angeordnet sind und darüber hinaus vorzugsweise abschnittsweise parallel zueinander und zu der Verschleißfläche angeordnet sind, so bietet dies den Vorteil, dass damit jeweils das Erreichen einer neuen Abtragstiefe erfasst werden kann. Jedes Durchtrennen einer Leiterbahn signalisiert dann das Erreichen einer neuen Abtragstiefe. Wenn die jeweiligen Abstände der einzelnen Leiter zur ursprünglichen Verschleißfläche und vorzugsweise auch untereinander bekannt sind, dann lässt sich über die verbliebenen, noch nicht abgefrästen bzw. unterbrochenen Leiterbahnen die bereits abgetragene Dicke und die Restdicke der Verschleißschicht des Verschleißteils ermitteln. Je dünner die Leiter sind, desto präziser ist der Rückschluss auf die erreichte Abtragstiefe, d. h. die bereits abgetragene Dicke der Materialschicht möglich. Je geringer die vorbestimmten Abstände zwischen den einzelnen parallelen Leiterbahnen gewählt ist, desto genauer ist die Auflösung der Messeinrichtung.

Im Rahmen der vorliegenden Erfindung wird auch die Betriebszeit des Verschleißteils miterfasst. Dies erfolgt zum Zwecke der Berechnung einer sogenannten Verschleißrate r als Verhältnis zwischen Materialabtrag an der Verschleißfläche und der Betriebsdauer des Verschleißteils, in welcher der Abtrag aufgrund des Betriebes des Verschleißteils erfolgt ist oder erforderlich geworden war. Diese Formulierung unterscheidet zwischen dem Abtrag, welcher während des Betriebs des Verschleißteils erfolgt (ist) und dem Abtrag, welcher nach Betrieb des Verschleißteils im Rahmen einer Aufbereitung der Verschleißfläche erfolgt, weil er dann aufgrund einer Beschädigung der Verschleißfläche erforderlich geworden war.

Es ist von Vorteil, die Auswerteeinrichtung als Teil der Messeinrichtung in Form eines Microcontrollers auszubilden, weil ein solcher Microcontroller eine sehr individuelle, auch erfindungsgemäße Auswertung der ihm zugeführten Messdaten ermöglicht.

Die erfindungsgemäße Messeinrichtung kann eine Energieversorgungsquelle aufweisen zur Bereitstellung von elektrischer Energie, den elektrischen Widerstand, die Auswerteeinrichtung und/oder ein Modul zur kabellosen Übertragung von Mess- und/oder Auswertedaten. Zumindest einzelne, vorzugsweise jedoch alle diese Komponenten sind als kompakte Baueinheit vorzugsweise auf einer elektrischen Platine realisiert.

Ausgebildet als eine solche kompakte Baueinheit empfiehlt sich vorzugsweise die komplette Messeinrichtung für eine zumindest teilweise, vorzugsweise jedoch vollständige Integration in das Verschleißteil. Mit dem besagten Modul zur kabellosen Übertragung von Mess- oder Auswertedaten können dann die besagten Daten kabellos an einen beliebigen Empfänger zur weiteren Bearbeitung oder Anzeige ausgegeben werden.

Um einen besseren Überblick über die Verteilung der Verschleißschichtdicke bzw. des Materialabtrags über der Verschleißfläche zu bekommen, können mehrere der erfindungsgemäßen Verschleißsensoren, d. h. der elektrischen Widerstände in der Verschleißschicht verteilt angeordnet sein. Dabei muss nicht zwangsläufig jedem elektrischen Widerstand eine eigene komplette Messeinrichtung wie soeben beschrieben, zugeordnet sein. Vielmehr können die einzelnen elektrischen Widerstände, die ihrerseits typischerweise aus einer Mehrzahl der besagten Leitungen bestehen, beispielsweise per Kabel an eine zentrale Auswerteeinrichtung angeschlossen sein. Die Auswerteeinrichtung überprüft dann, bei welchem der elektrischen Widerstände jeweils einzelne Leiterbahnen in ihrem Querschnitt reduziert oder durchtrennt worden sind. Auf diese Weise lässt sich eine jeweils verbleibende Verschleißschichtdicke an unterschiedlichen Positionen an der Verschleißfläche oder eine mittlere verbleibende Verschleißschichtdicke bezogen auf die gesamte Verschleißfläche ermitteln.

Wie gesagt besteht der erfindungsgemäße elektrische Widerstand jeweils mindestens aus einem elektrischen Leiter, vorzugsweise jedoch aus einer Mehrzahl von elektrischen Leitern, welche parallel zueinander angeordnet sind. Die Ausbildung eines solchen elektrischen Widerstandes kann recht einfach beispielsweise durch Anordnung der Leiterbahnen auf einer Platine realisiert sein. In besonderer Ausgestaltung können auf einer doppelseitigen Platine zwei elektrische Widerstände realisiert sein; vorzugsweise ist dann auf jeder Seite der Platine jeweils einer der elektrischen Widerstände realisiert. Weiter vorzugsweise sind dann die einzelnen Leiterbahnen der beiden elektrischen Widerstände in ihrer Höhe zueinander versetzt angeordnet. Diese Ausbildung der elektrischen Widerstände ermöglicht eine besonders hoch auflösende Erfassung des Materialabtrags an der Verschleißfläche.

Besonders vorteilhaft kommt die vorliegende Erfindung zum Einsatz bei Kokillen zum Gießen von flüssigem Metall als Verschleißteil. Der Verschleißsensor in Form des elektrischen Widerstandes wird dann in die Heißseite der Kokille als Verschleißfläche integriert.

Die oben genannte Aufgabe wird weiterhin durch das Verfahren gemäß Anspruch 12 gelöst. Die Vorteile dieses Verfahrens entsprechen den oben mit Bezug auf die Vorrichtung genannten Vorteilen.

Vorteilhafte Ausgestaltungen der Vorrichtung und des Verfahrens sind Gegenstand der abhängigen Ansprüche.

Der Beschreibung sind vier Figuren beigefügt, wobei
- Figur 1: die erfindungsgemäße Vorrichtung;
- Figur 2: die erfindungsgemäße Messeinrichtung mit einem zweiten Ausführungsbeispiel für den elektrischen Widerstand;
- Figur 3: die erfindungsgemäße Vorrichtung gemäß einem weiteren Ausführungsbeispiel; und
- Figur 4: die Anordnung zweier elektrische Widerstände auf einer Platine
zeigt.

Die Erfindung wird nachfolgend unter Bezugnahme auf die genannten Figuren in Form von Ausführungsbeispielen detailliert beschrieben. In allen Ausführungsbeispielen sind gleiche technische Elemente mit gleichen Bezugszeichen bezeichnet.

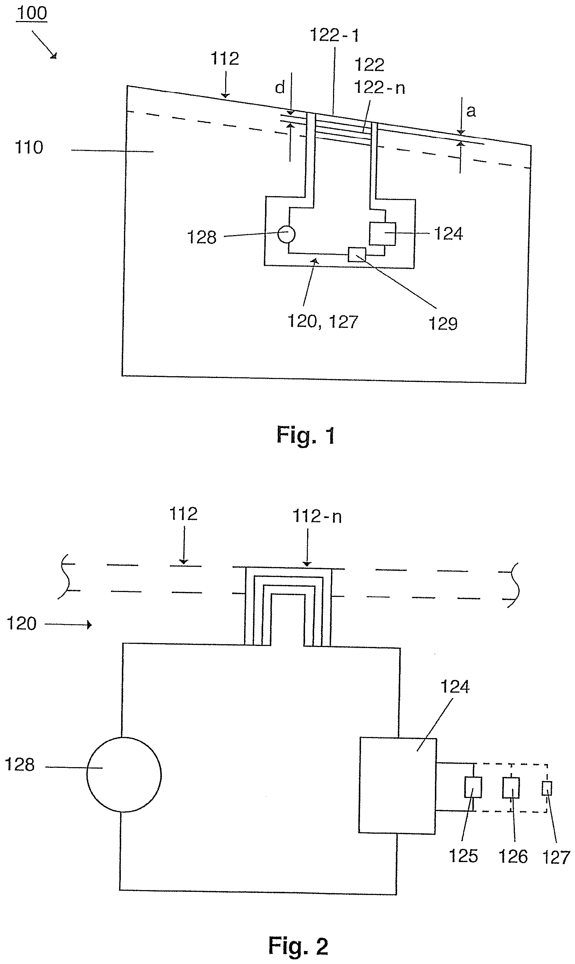

Figur 1 zeigt die erfindungsgemäße Vorrichtung 100. Sie umfasst ein Verschleißteil 110, beispielsweise eine Kokille zum Gießen von flüssigem Metall. Das Verschleißteil hat eine Verschleißfläche 112, welche einem Materialabtrag unterliegt. Im Fall einer Kokille als Verschleißteil ist dies deren Heißseite, d. h. diejenige Seite, welche den Kokillenhohlraum zum Gießen des Metalls begrenzt und aufspannt. Die Vorrichtung 100 umfasst weiterhin eine Messeinrichtung 120, welche vorzugsweise in das Verschleißteil 110 integriert ist. In Figur 1 ist diese Messeinrichtung in einem Hohlraum innerhalb des Verschleißteils integriert.

Die Messeinrichtung umfasst eine Energieversorgungsquelle 128 in Form einer Spannungs- oder Stromquelle zum Bereitstellen von elektrischer Energie. Weiterhin umfasst die Messeinrichtung 120 einen Verschleißsensor 122 in Form eines elektrischen Widerstandes, welcher in die Verschleißfläche 112 integriert ist und bei einem Materialabtrag an der Verschleißfläche 112 selber mechanisch mitabgetragen wird. Weiterhin umfasst die Messeinrichtung 120 eine Auswerteeinrichtung 124 zum Erfassen einer Änderung, insbesondere einer Erhöhung des Ohm'schen Widerstandswertes des elektrischen Widerstandes 122 in Abhängigkeit seines eigenen Materialabtrags. Die Auswerteeinrichtung 124 ist ausgebildet, diese erfasste Widerstandsänderung auszuwerten im Hinblick auf die Größe des Materialabtrags an der Verschleißfläche oder im Hinblick auf die verbleibende Dicke der Verschleißfläche. Darüber hinaus kann die Messeinrichtung 120 optional noch ein Modul 129 zur vorzugsweise kabellosen Übertragung von Mess- oder von der Auswerteeinrichtung 124 erzeugten Auswertedaten an einen entfernten Ort zur Weiterverarbeitung der Daten umfassen.

In Figur 1 ist weiterhin zu erkennen, dass der elektrische Widerstand aus einer Mehrzahl N von elektrischen Leitern 122-n mit 1 ≤ n ≤ N gebildet ist, welche abschnittsweise parallel zueinander und parallel zu der Verschleißfläche 112 angeordnet sind. Der Abstand der einzelnen Leiter 122-n zu der ursprünglichen Verschleißfläche 112 ist mit dem Bezugszeichen a bezeichnet. Das Bezugszeichen d bezeichnet den Abstand zweier benachbarter Leiter zueinander. Je geringer dieser Abstand ist, desto genauer ist die Auflösung, mit welcher ein Materialabtrag an der Verschleißfläche erfasst werden kann.

Gemäß der Erfindung ist es zwingend notwendig, dass der elektrische Widerstand 122 stets in die abzutragende Verschleißfläche integriert ist, um selber mit abgetragen zu werden und um auf diese Weise selber eine Änderung seines Ohm'schen Widerstandswertes zu erfahren. Nicht zwingend, sondern lediglich optional ist dagegen die Integration der übrigen besagten Elemente der Messeinrichtung 120 innerhalb des Verschleißteils. Alternativ könnten diese Komponenten auch außerhalb des Verschleißteils angeordnet sein.

Die Ausgestaltung des elektrischen Widerstandes 122 gemäß Figur 1 sieht vor, dass die elektrischen Leiter 122-n lediglich im Bereich der Verschleißfläche parallel zu dieser und parallel zueinander ausgebildet sind.

Figur 2 zeigt, dass die Leiter 122-n des elektrischen Widerstandes alternativ zu dem Ausführungsbeispiel gemäß Figur 1 auch u-förmig parallel zueinander angeordnet sein können.

Figur 2 zeigt weiterhin, dass ein Betriebssensor 125 vorgesehen sein kann zum Erfassen der Betriebstemperatur des Verschleißteils 110, vorzugsweise im Bereich der Verschleißfläche. In jedem Fall ist ein Schwingungssensor 126 vorgesehen zum Erfassen, ob das Verschleißteil 110 in Schwingungen versetzt ist oder nicht. Weiterhin kann zusätzlich ein weiterer Temperatursensor 127 vorgesehen sein zum Erfassen der Betriebstemperatur der Auswerteeinrichtung. Alle diese genannten Sensoren können dazu verwendet werden, die tatsächliche Betriebsdauer des Verschleißteils zu ermitteln. So kann die Betriebsdauer des Verschleißteils beispielsweise definiert und erfasst werden als diejenige Zeitdauer, während welcher die erfasste Betriebstemperatur des Verschleißteils einen vorgegebenen Temperaturschwellenwert überschreitet. In jedem Fall wird die Betriebsdauer erfasst als diejenige Zeitdauer, während welcher die Amplitude oder die Frequenz der Schwingung des Verschleißteils 110 einen vorgegebenen Schwellenwert überschreitet. Zusätzlich kann die Betriebsdauer des Verschleißteils 110 als diejenige Zeitdauer ermittelt werden, während welcher die Temperatur der Auswerteeinrichtung 124, erfasst mit Hilfe des Temperatursensors 127 einen vorgegebenen Temperaturschwellenwert überschreitet. Neben der besagten Änderung des Ohm'schen Widerstandswertes des elektrischen Widerstandes wird die Betriebsdauer insbesondere erfasst, um eine Verschleißrate r zu berechnen als Verhältnis des Materialabtrags an der Verschleißfläche zu der Betriebsdauer des Verschleißteils.

Weiterhin ist es vorteilhaft, wenn die Auswerteeinrichtung ausgebildet ist, neben den ermittelten Werten für den Ohm'schen Widerstand bzw. dessen Änderung und/oder die Betriebsdauer auch jeweils das zeitliche Datum für die Ermittlung dieser Werte mitzuspeichern. Dann kann daraus vorteilhafterweise eine Historie über den Materialabtrag an dem Verschleißteil ermittelt werden. Weiterhin ist es vorteilhaft, wenn die Materialabträge an der Verschleißfläche und die zugehörigen Betriebsdauern fortlaufend neu gemessen werden; so kann die Verschleißrate regelmäßig aktualisiert und in ihrem zeitlichen Verlauf ausgewertet werden.

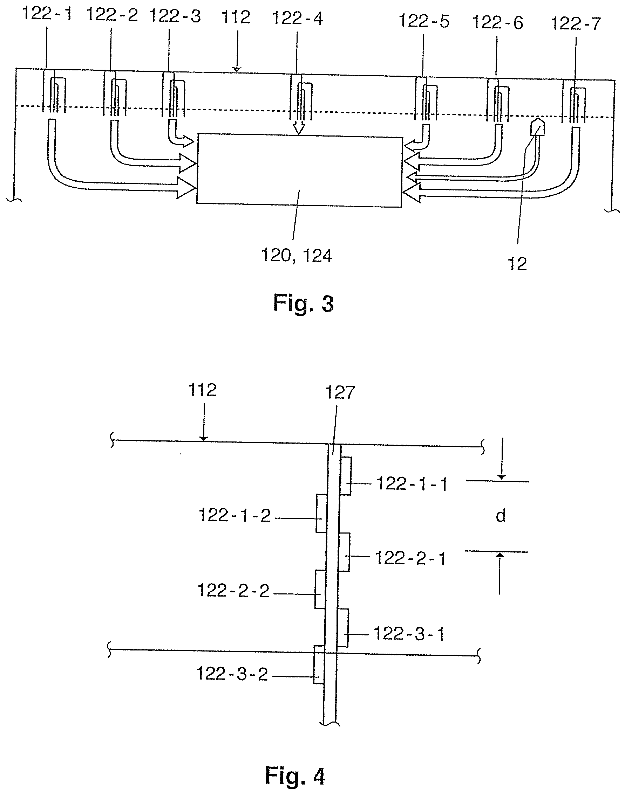

Figur 3 zeigt die Möglichkeit, eine Mehrzahl K elektrischer Widerstände an verschiedenen Orten der Verschleißfläche 112 verteilt anzuordnen. Erfindungsgemäß kann jedem einzelnen dieser Widerstände 122-k mit 1 ≤ k ≤ K = 7 eine eigene Messeinrichtung 120 zugeordnet sein. Alternativ ist es jedoch möglich, wie in Figur 3 gezeigt, dass die einzelnen elektrischen Widerstände 122-k jeweils über Kabelverbindungen an eine zentrale Messeinrichtung 120 und insbesondere an eine zentrale Auswerteeinrichtung 124 angeschlossen sind.

Figur 4 zeigt schließlich eine besondere Ausgestaltung zweier elektrischer Widerstände 122. Konkret ist ein erster elektrischer Widerstand k = 1 auf der rechten Seite einer Platine 127 angeordnet. Ein zweiter elektrischer Widerstand k = 2 ist auf der linken Seite gegenüberliegend zu dem ersten elektrischen Widerstand auf derselben Platine 127 angeordnet. In Figur 4 ist zu erkennen, dass die Leiterbahnen 122-n-k mit k = 1 des ersten elektrischen Widerstandes in der Höhe versetzt zu den Leiterbahnen 122-n-k mit k = 2 angeordnet sind. Weil die Auflösung eines einzelnen elektrischen Widerstandes im Hinblick auf den Materialabtrag insbesondere durch den Abstand d zweier benachbarter Leiter 122-n definiert ist, lässt sich durch die gezeigte Anordnung der Leiter von zwei elektrischen Widerständen die Auflösung halbieren bzw. beliebig erhöhen.

Schließlich sei betont, dass alle beschriebenen Ausführungsbeispiele zur Gestaltung des elektrischen Widerstandes und zur Erfassung der Betriebsdauer des Verschleißteils beliebig miteinander kombiniert werden können, sofern dies technisch sinnvoll ist. Insbesondere sind die Kombinationen nicht auf die in den einzelnen Figuren gezeigten Kombinationen beschränkt.

### Bezugszeichenliste

- 100: Vorrichtung
- 110: Verschleißteil
- 112: Verschleißfläche
- 120: Messeinrichtung
- 122: Verschleißsensor bzw. elektrischer Widerstand
- 124: Auswerteeinrichtung
- 125: Temperatursensor für Verschleißteil
- 126: Schwingungssensor
- 127: Temperatursensor für die Betriebstemperatur der Auswerteeinrichtung/Platine
- 128: elektrische Energieversorgungsquelle
- 129: Modul

- n: Anzahl der elektrischen Leiter pro elektrischem Widerstand mit 1 ≤ n ≤ N
- k: Anzahl von elektrischen Widerständen pro Messeinrichtung mit 1 ≤ k ≤ K
- a: Tiefe, in welcher der elektrische Leiter gegenüber der Verschleißfläche angeordnet ist
- d: Abstand zwischen zwei elektrischen Leitern eines elektrischen Widerstandes
- r: Verschleißrate

## Patentansprüche

1. Vorrichtung (100) aufweisend
ein Verschleißteil (110)mit einer Verschleißfläche (112); und
eine Messeinrichtung (120) mit mindestens einem in die Verschleißfläche (112) integrierten Verschleißsensor (122) zum Erfassen eines Materialabtrags an der Verschleißfläche;
wobei der Verschleißsensor (122) in Form eines elektrischen Widerstandes ausgebildet ist, welcher bei dem Materialabtrag an der Verschleißfläche selber mechanisch mit abgetragen wird, und
wobei die Messeinrichtung (120) weiterhin eine Auswerteeinrichtung (124) aufweist zum Erfassen einer Änderung, insbesondere einer Erhöhung, des ohmschen Widerstandswertes des elektrischen Widerstandes (122) in Abhängigkeit seines eigenen Materialabtrags und zum Rückschließen von der erkannten Änderung des Widerstandwertes auf die Größe des Materialabtrags an der Verschleißfläche (112) oder auf die verbleibende Dicke der Verschleißfläche;
**dadurch gekennzeichnet,**
**dass** die Messeinrichtung (120) weiterhin aufweist einen Schwingungssensor (126) zum Erfassen, ob das Verschleißteil in Schwingungen versetzt ist; und
**dass** die Auswerteeinrichtung (124) ausgebildet ist, die Betriebsdauer des Verschleißteils (110) zu ermitteln als diejenige Zeitdauer während welcher die Amplitude oder die Frequenz der Schwingung des Verschleißteils einen vorgegebenen Schwellenwert überschreitet.

2. Vorrichtung (100) nach Anspruch 1,
**dadurch gekennzeichnet,**
**dass** der elektrische Widerstand (122) aus mindestens einem elektrischen Leiter (122-n) gebildet ist, welcher vorzugsweise abschnittsweise parallel zu der Verschleißfläche (112) verlaufend angeordnet ist.

3. Vorrichtung (100) nach Anspruch 2,
**dadurch gekennzeichnet,**
**dass** der elektrische Leiter (122-1) an der Oberfläche der Verschleißfläche (112) verlegt ist.

4. Vorrichtung (120) nach Anspruch 2 oder 3,
**dadurch gekennzeichnet,**
**dass** der elektrische Widerstand (112) aus einer Mehrzahl elektrischer Leiter (122-n) gebildet ist, welche vorzugsweise zumindest abschnittsweise parallel und in unterschiedlichen Tiefen (a) in Bezug auf die Verschleißfläche (112) angeordnet sind.

5. Vorrichtung (100) nach Anspruch 4,
**dadurch gekennzeichnet,**
**dass** die parallelen Abschnitte der elektrischen Leiter jeweils in vorbestimmten, vorzugsweise gleichen Abständen (d) zueinander angeordnet sind.

6. Vorrichtung (100) nach einem der vorangegangenen Ansprüche,
**dadurch gekennzeichnet,**
**dass** die Auswerteeinrichtung (124) in Form eines Mikrocontrollers ausgebildet ist.

7. Vorrichtung (100) nach einem der vorangegangenen Ansprüche,
**dadurch gekennzeichnet,**
**dass** die Messeinrichtung (120) aufweisend eine elektrische Energieversorgungsquelle (128), den mindestens einen elektrischen Widerstand (122), die Auswerteeinrichtung (124) und/oder ein Modul (129) zur vorzugsweise kabellosen Übertragung von Mess- oder Auswertedaten (127) als kompakte Baueinheit vorzugsweise auf einer Platine (127) realisiert ist.

8. Vorrichtung (100) nach einem der vorangegangenen Ansprüche,
**dadurch gekennzeichnet,**
**dass** die Messeinrichtung (124) eine Mehrzahl (K) von elektrischen Widerständen (122-k) aufweist, welche über die Verschleißfläche (112) örtlich verteilt angeordnet sind, wobei die einzelnen elektrischen Widerstande beispielsweise per Kabel oder Funk an die zentrale Auswerteeinrichtung (124) angeschlossen sind.

9. Vorrichtung (100) nach Anspruch 8,
**dadurch gekennzeichnet,**
**dass** jeweils einer der elektrischen Widerstände (122-k) auf der Vorder- und Rückseite der Platine (127) angeordnet ist, wobei die Leiterbahnen (122-n) der beiden Widerstände vorzugsweise zueinander in der Höhe versetzt sind.

10. Vorrichtung (100) nach einem der vorangegangenen Ansprüche,
**dadurch gekennzeichnet,**
**dass** die Messeinrichtung (120) zumindest teilweise, vorzugsweise vollständig, in dem Verschleißteil (110) integriert ist.

11. Vorrichtung (100) nach einem der vorangegangenen Ansprüche,
**dadurch gekennzeichnet,**
**dass** es sich bei dem Verschleißteil (110) um eine Kokille zum Gießen von flüssigem Metall handelt, wobei der Verschleißsensor (122) in die Heißseite der Kokille als Verschleißfläche (112) integriert ist.

12. Verfahren zum Betreiben einer Vorrichtung (100) mit einem Verschleißteil (110) mit einer Verschleißfläche (112) in welche ein elektrischer Widerstand (122) einer Messeinrichtung (120) integriert ist, aufweisend folgende Schritte:
Abtragen der Verschleißfläche (112) während des normalen Betriebs und/oder bei einer Aufbereitung des Verschleißteils (110) außerhalb des normalen Betriebs, wobei automatisch gleichzeitig auch eine Abtragung des elektrischen Widerstandes mit erfolgt, und
Auswerten der Abtragung des elektrischen Widerstandes durch eine Auswerteeinrichtung (124) wie folgt:
Ermitteln der Erhöhung des ohmschen Widerstandswertes aufgrund der mechanischen Abtragung des elektrischen Widerstandes (122); und
Rückschließen auf die quantitative Abtragung oder die verbliebene Restdicke der Verschleißfläche (112) nach Maßgabe der detektierten Erhöhung des ohmschen Widerstandswertes
**dadurch gekennzeichnet,**
**dass** die Betriebsdauer des Verschleißteils (110) ermittelt wird als diejenige Zeitdauer während welcher die Amplitude oder die Frequenz der Schwingung des Verschleißteils einen vorgegebenen Schwellenwert überschreitet.

13. Verfahren nach Anspruch 12,
**dadurch gekennzeichnet,**
**dass** zumindest ein elektrischer Leiter (122-n) des elektrischen Widerstandes (122) bei dessen mechanischer Abtragung durchtrennt oder in seinem Querschnitt verringert wird.

14. Verfahren nach Anspruch 12 oder 13,
**dadurch gekennzeichnet**,
die Erhöhung des ohmschen Widerstandswertes ermittelt wird als Differenz zweier - zu unterschiedlichen Zeitpunkten - direkt gemessener ohmscher Ist-Widerstandswerte des Ohm'schen Widerstandes, in Form einer Änderung der Stromstärke durch den elektrischen Widerstand oder in Form einer Änderung des Spannungsabfalls über dem elektrischen Widerstand.

15. Verfahren nach Anspruch 12,
**dadurch gekennzeichnet,**
**dass** die ermittelte Betriebsdauer des Verschleißteils (110) mit einem vorgegebenen Zeitschwellenwert, insbesondere einer vorgegebenen maximalen zulässigen Betriebsdauer verglichen und bei Überschreitung des Zeitschwellenwertes ein Alarm ausgelöst und/oder ein Auswechseln des Verschleißteils (110) empfohlen wird.

16. Verfahren nach einem der Ansprüche 12 bis 15,
**dadurch gekennzeichnet,**
**dass** - vorzugsweise mit Hilfe der die Auswerteeinrichtung (124) -weiterhin eine Verschleißrate (r) berechnet wird in der Form:
r = Abtrag der Verschleißfläche / Betriebsdauer des Verschleißteils, in welcher der Abtrag aufgrund des Betriebs des Verschleißteils erfolgt ist oder erforderlich geworden war.

17. Verfahren nach einem der Ansprüche 12 - 16,
**dadurch gekennzeichnet,**
**dass** - vorzugsweise mit Hilfe der Auswerteeinrichtung (124) - neben den ermittelten Werten für den Ohm'schen Widerstandswert, für die Betriebsdauer des Verschleißteils und die Verschleißrate oder deren jeweiligen Änderungen jeweils auch das zeitliche Datum der Erfassung mit abgespeichert wird.

18. Verfahren nach Anspruch 16 und 17,
**dadurch gekennzeichnet,**
**dass** die Abträge der Verschleißfläche (112) und die zugehörigen Betriebsdauern fortlaufend neu gemessen werden; und
**dass** vorzugsweise die Verschleißrate (r) regelmäßig aktualisiert wird auf Basis der fortlaufend gemessenen Abträge und der jeweiligen Betriebsdauern.

## Claims

1. Device (100) comprising
a wear part (110) with a wear area (112); and
a measuring device (120) with at least one wear sensor (122), which is integrated in the wear area (112), for detecting material removal at the wear area;
wherein the wear sensor (122) is constructed in the form of an electrical resistance which when material removal at the wear area takes place is itself mechanically removed therewith; and
wherein the measuring device (120) further comprises an evaluating device (124) for detecting a change, particularly an increase, of the resistive impedance value of the electrical resistance (122) in dependence on its own material removal and for making a conclusion from the recognised change in the impedance value about the amount of material removal at the wear area (112) or about the remaining thickness of the wear area; **characterised in that** the measuring device (120) further comprises an oscillation sensor (126) for detecting whether the wear part is set into oscillation; and the evaluating device (124) is constructed to ascertain the service life of the wear part (110) as that time period during which the amplitude or the frequency of the oscillation of the wear part exceeds a predetermined threshold value.

2. Device (100) according to claim 1, **characterised in that** the electrical resistance (122) is formed from at least one electrical conductor (122-n), which is preferably arranged to extend in a section parallel to the wear area (112).

3. Device (100) according to claim 2, **characterised in that** the electrical conductor (122-1) is laid at the surface of the wear area (112).

4. Device (120) according to claim 2 or 3, **characterised in that** the electrical resistance (112) is formed from a plurality of electrical conductors (122-n) which are preferably arranged at least in sections parallel and at different depths (a) with respect to the wear area (112).

5. Device (100) according to claim 4, **characterised in that** the parallel sections of the electrical conductors are respectively arranged at predetermined, preferably the same, spacings (d) from one another.

6. Device (100) according to any one of the preceding claims, **characterised in that** the evaluating device (124) is constructed in the form of a microcontroller.

7. Device (100) according to any one of the preceding claims, **characterised in that** the measuring device (120) comprising an electrical energy supply source (128), the at least one electrical resistance (122), the evaluating device (124) and/or a module (129) for preferably cable-free transfer of measurement or evaluation data is realised as a compact constructional unit preferably on a circuitboard (127) preferably for cable-free transmission of measurement or evaluation data (127).

8. Device (100) according to any one of the preceding claims, **characterised in that** the measuring device (124) comprises a plurality (K) of electrical resistances (122-k) arranged in local distribution over the wear area (112), wherein the individual electrical resistances are connected by, for example, cable or radio with the central evaluating device (124).

9. Device (100) according to claim 8, **characterised in that** in each instance one of the electrical resistances (122-k) is arranged on the front side and rear side of the circuitboard (127), wherein the conductor tracks (122-n) of the two resistances are preferably displaced in height relative to one another.

10. Device (100) according to any one of the preceding claims, **characterised in that** the measuring device (120) is integrated at least partly, preferably completely, in the wear part (110).

11. Device (100) according to any one of the preceding claims, **characterised in that** the wear part (110) is a mould for casting liquid metal, wherein the wear sensor (122) is integrated in the hot side of the mould as wear area (112).

12. Method of operating a device (100) with a wear part (110) with a wear area (112) in which an electrical resistance (122) of a measuring device (120) is integrated, comprising the following steps:
removing the wear area (112) during normal operation and/or at a time of preparation of the wear part (110) outside normal operation, wherein wear of the electrical resistance automatically takes place simultaneously therewith, and
evaluating the removal of the electrical resistance by an evaluating device (124) as follows:
determining the increase in the resistive impedance value due to mechanical removal of the electrical resistance (122); and
making a conclusion about the quantitative removal or the remaining residual thickness of the wear area (112) as a function of the detected increase of the resistive impedance value;
**characterised in that** the service life of the wear part (110) is determined as that time period during which the amplitude or the frequency of the oscillation of the wear part exceeds a predetermined threshold value.

13. Method according to claim 12, **characterised in that** at least one electrical conductor (122-n) of the electrical resistance (122) during the mechanical wear thereof is separated or is reduced in its cross-section.

14. Method according to claim 12 or 13, **characterised in that** the increase in the resistive impedance value is determined as the difference of two directly measured - at different instants - actual resistive impedance values of the resistive impedance in the form of a change in the current strength due to the electrical resistance or in the form of a change in the voltage drop due to the electrical resistance.

15. Method according to claim 12, **characterised in that** the determined service life of the wear part (110) is compared with a predetermined time threshold value, particularly a predetermined maximum permissible service life, and in the case of exceeding of the time threshold value an alarm is triggered and/or a change of the wear part (110) is recommended.

16. Method according to any one of claims 12 to 15, **characterised in that** in addition a wear rate (r) is calculated, preferably with the help of the evaluating device (124), in the form:
r = removal of the wear area / service life of the wear part in which the removal has taken place due to operation of the wear part or has been necessary.

17. Method according to any one of claims 12 to 16, **characterised in that** apart from the determined values for the resistive impedance value, for the service life of the wear part and for the wear rate or the respective changes thereof the respective time date of the detection is also conjunctively stored, preferably with the help of the evaluating device (124).

18. Method according to claim 16 and 17, **characterised in that** the removals of the wear area (112) and the associated service lives are continuously re-measured and that the wear rate (r) is preferably regularly updated on the basis of the continuously measured wears and the respective service lives.

## Revendications

1. Dispositif (100) présentant :
un élément d'usure (110) comprenant une surface d'usure (112) ; et
un dispositif de mesure (120) comprenant au moins un capteur d'usure (122) intégré dans la surface d'usure (112) destiné à enregistrer un enlèvement de matière à la surface d'usure ;
dans lequel le capteur d'usure (122) est réalisé sous la forme d'une résistance électrique qui, lors de l'enlèvement de matière, subit un enlèvement conjoint par voie mécanique à la surface d'usure elle-même ; et
dans lequel le dispositif de mesure (120) présente en outre un dispositif d'évaluation (124) destiné à l'enregistrement d'une modification, en particulier d'une augmentation de la valeur de résistance ohmique de la résistance électrique (122) en fonction de son propre enlèvement de matière et destiné à la déduction, à partir de la modification reconnue de la valeur de résistance, de l'ampleur de l'enlèvement de matière à la surface d'usure (112) ou de l'épaisseur restante de la surface d'usure ;
**caractérisé**
**en ce que** le dispositif de mesure (120) présente en outre un capteur de l'oscillation (126) destiné à enregistrer le fait de savoir si l'élément d'usure est entré en oscillation ; et
**en ce que** le dispositif d'évaluation (124) est réalisé afin de déterminer la durée d'exploitation de l'élément d'usure (110) comme étant la durée au cours de laquelle l'amplitude ou la fréquence de l'oscillation de l'élément d'usure dépasse vers le haut une valeur seuil prédéfinie.

2. Dispositif (100) selon la revendication 1, **caractérisé en ce que** la résistance électrique (122) est réalisée à partir d'au moins un conducteur électrique (122-n) qui est disposé de manière s'étendre de préférence en partie en parallèle par rapport à la surface d'usure (112).

3. Dispositif (100) selon la revendication 2, **caractérisé en ce que** le conducteur électrique (122-1) est déposé contre la surface de la surface d'usure (112).

4. Dispositif (100) selon la revendication 2 ou 3, **caractérisé en ce que** la résistance électrique (122) est réalisée à partir d'une multitude de conducteurs électriques (122-n) qui sont disposés de préférence, au moins en partie, en parallèle et à des profondeurs différentes (a) par rapport à la surface d'usure (112).

5. Dispositif (100) selon la revendication 4, **caractérisé en ce que** les tronçons parallèles des conducteurs électriques sont disposés respectivement à des distances prédéfinies (d), de préférence égales, les uns par rapport aux autres.

6. Dispositif (100) selon l'une quelconque des revendications précédentes, **caractérisé en ce que** le dispositif d'évaluation (124) est réalisé sous la forme d'un microcontrôleur.

7. Dispositif (100) selon l'une quelconque des revendications précédentes, **caractérisé en ce que** le dispositif de mesure (120) présentant une source d'alimentation d'énergie électrique (128), ladite au moins une résistance électrique (122), le dispositif d'évaluation (124) et/ou un module (129) pour la transmission de préférence sans fil de données de mesure ou d'évaluation (127) est réalisé sous la forme d'une unité de structure compacte, de préférence sur une platine (127).

8. Dispositif (100) selon l'une quelconque des revendications précédentes, **caractérisé en ce que** le dispositif de mesure (120) présente une multitude (K) de résistances électriques (122-k) qui sont disposées sous la forme d'une distribution locale par-dessus la surface d'usure (112) ; dans lequel les résistances électriques individuelles sont raccordées par exemple par câble ou par radio au dispositif d'évaluation central (124).

9. Dispositif (100) selon la revendication 8, **caractérisé en ce que**, respectivement une des résistances électriques (122-k) est disposée sur les côtés avant et arrière de la platine (127) ; dans lequel les pistes conductrices (122-n) des deux résistances sont de préférence décalées en hauteur, l'une par rapport à l'autre.

10. Dispositif (100) selon l'une quelconque des revendications précédentes, **caractérisé en ce que** le dispositif de mesure (120) est intégré, au moins en partie, de préférence complètement, dans l'élément d'usure (110).

11. Dispositif (100) selon l'une quelconque des revendications précédentes, **caractérisé en ce que**, en ce qui concerne l'élément d'usure (110) il s'agit d'une lingotière pour la coulée d'un métal liquide ; dans lequel le capteur d'usure (122) est intégré dans le côté chaud de la lingotière, pour faire office de surface d'usure (112).

12. Procédé pour l'utilisation d'un dispositif (100) comprenant un élément d'usure (110) muni d'une surface d'usure (112) dans laquelle est intégrée une résistance électrique (122) d'un dispositif de mesure (120), présentant les étapes suivantes consistant à :
enlever la surface d'usure (112) au cours de l'exploitation normale et/ou au cours d'une préparation de l'élément d'usure (110) en dehors de l'exploitation normale ; dans lequel se produit également de manière automatique et en simultanéité un enlèvement de la résistance électrique ; et
évaluer l'enlèvement de la résistance électrique par l'intermédiaire d'un dispositif d'évaluation (124) comme indiqué ci-après :
on détermine l'augmentation de la valeur de résistance ohmique sur base de l'enlèvement mécanique de la résistance électrique (122) ; et
on déduit l'enlèvement quantitatif ou l'épaisseur résiduelle restante de la surface d'usure (112) en fonction de l'augmentation détectée de la valeur de résistance ohmique ;
**caractérisé en ce qu'**on détermine la durée d'exploitation de l'élément d'usure (110) comme étant la durée au cours de laquelle l'amplitude ou la fréquence de l'oscillation de l'élément d'usure dépasse vers le haut une valeur seuil prédéfinie.

13. Procédé selon la revendication 12, **caractérisé en ce qu'**au moins un conducteur électrique (122-n) de la résistance électrique (122), lors de l'enlèvement mécanique de cette dernière, est sectionné ou subit une réduction en ce qui concerne sa section transversale.

14. Procédé selon la revendication 12 ou 13, **caractérisé en ce qu'**on détermine l'augmentation de la valeur de résistance ohmique comme étant la différence entre deux valeurs de résistance ohmique réelles directement mesurées - à des moments différents - de la résistance ohmique, sous la forme d'une modification de l'intensité du courant par l'intermédiaire d'une résistance électrique ou sous la forme d'une modification de la chute de tension par l'intermédiaire de la résistance électrique.

15. Procédé selon la revendication 12, **caractérisé en ce qu'**on compare la durée d'exploitation déterminée de l'élément d'usure (110) à une valeur temporelle seuil prédéfinie, en particulier à une durée exploitation maximale autorisée prédéfinie, et lors d'un déplacement vers le haut de la valeur temporelle seuil, une alarme est déclenchée et/ou un remplacement de l'élément d'usure (110) est recommandé.

16. Procédé selon l'une quelconque des revendications 12 à 15 **caractérisé en ce que** - de préférence à l'aide du dispositif d'évaluation (124) - on calcule en outre une vitesse d'usure (r), sous la forme de l'équation r = enlèvement de la surface d'usure/durée d'exploitation de l'élément d'usure, à laquelle l'enlèvement a eu lieu ou était devenu nécessaire, sur base de l'exploitation de l'élément d'usure.

17. Procédé selon l'une quelconque des revendications 12 à 16, **caractérisé en ce que** - de préférence à l'aide du dispositif d'évaluation (124) - outre les valeurs déterminées pour la valeur de résistance ohmique, pour la durée d'exploitation de l'élément d'usure et la vitesse d'usure ou leurs modifications respectives, on met en mémoire respectivement également de manière conjointe la date exacte de l'enregistrement.

18. Procédé selon les revendications 16 et 17, **caractérisé en ce qu'**on remesure de façon permanente les enlèvements de la surface d'usure (112) et les durées d'exploitation correspondantes ; et **en ce qu'**on actualise de manière régulière de préférence les vitesses d'usure (r) sur base des enlèvements mesurés en continu et des durées d'exploitation respectives.
